# FASCICULE DE BREVET EUROPEEN

(11) **EP 0 424 199 B1**
(45) Date de publication et mention de la délivrance du brevet: **01.09.1993**
(21) Numéro de dépôt: 90402670.5
(22) Date de dépôt: 27.09.1990
(51) Int. Cl.: F16H 57/00, F16H 1/38

(54) **Dispositif formant différentiel à amortisseur à friction**
Differential mit Reibdämpfung
Differential with friction damping

(30) Priorité: 20.10.1989 FR 8913794
(43) Date de publication de la demande: 24.04.1991
(73) Titulaire: AUTOMOBILES PEUGEOT, 75116 Paris (FR); AUTOMOBILES CITROEN, 92200 Neuilly-sur-Seine (FR)
(72) Inventeur: Potrawiak, Philippe, F-78400 Chatou (FR); Le Salver, Robert, F-78570 Chateloup-Les-Vignes (FR)
(74) Mandataire: Beauchamps, Georges

(56) Documents cités:
- CH-A- 167 368
- FR-A- 340 689
- FR-A- 523 184
- US-A- 1 468 188
- US-A- 2 909 911

## Description

La présente invention concerne un dispositif formant différentiel utilisé notamment dans un véhicule automobile à boîte de vitesses mécanique.

On connaît des différentiels de véhicules automobiles du type comprenant généralement un boîtier externe entraîné en rotation par l'intermédiaire d'un pignon solidaire du boîtier en engrènement avec un pignon de renvoi solidaire d'un arbre de transmission du véhicule et un boîtier interne porte-satellites logé dans le boîtier externe en étant mécaniquement accouplé en rotation à celui-ci et coaxial aux deux arbres de sortie du différentiel.

Lors de la conduite du véhicule, notamment en suivant une file de véhicules à faible allure, il se produit souvent des oscillations longitudinales dues à une variation de la position de la commande du papillon des gaz, ou d'un levier de charge du moteur, imposée par le conducteur et entraînant une variation du couple moteur transmise au pignon du boîtier externe du différentiel par l'arbre de transmission du véhicule. De telles oscillations, dont la fréquence relativement basse dépend du rapport de boîte de vitesses engagé, sont désagréables pour le conducteur et les éventuels passagers.

FR-A-340 689 décrit un dispositif formant différentiel comportant les caractéristiques du préambule de la revendication 1.

Cependant, ce dispositif connu laisse toujours subsister des sensations désagréables au conducteur car bien qu'il atténue l'intensité des variations du couple transmis par le différentiel, il ne les amortit pas : les oscillations mentionnées précédemment ne s'interrompent pas vite.

CH-A-167 368 décrit un volant-moteur muni d'un accouplement à ressorts et disques d'amortissement. Cependant, ce brevet antérieur ne vise pas à atténuer en les amortissant les oscillations ressenties par le conducteur.

La présente invention a pour but de pallier les inconvénients précités en proposant un dispositif formant différentiel comprenant les caractéristiques de la revendication 1.

Selon une caractéristique de l'invention, les disques du moyen à friction sont serrés axialement par des ressorts de compression logés dans le boîtier interne en étant de préférence situés sur une même circonférence et angulairement espacés de façon équidistante les uns des autres.

Selon une autre caractéristique de l'invention, les moyens autorisant le débattement angulaire comprennent au moins deux tenons solidaires du boîtier interne engagés chacun dans un évidement courbe réalisé dans le boîtier externe concentriquement à ce dernier et les moyens élastiques de rappel comprennent au moins deux paires de ressorts de compression, chacune disposée dans un évidement courbe de façon que les deux ressorts de la paire soient en appui de part et d'autre d'un tenon.

Avantageusement, les tenons sont situés à l'opposé de la face extrême du boîtier interne et parallèles aux arbres de sortie du différentiel et les évidements courbes sont identiques et situés sur une même circonférence.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquel.

La figure 1 est une vue en coupe longitudinales du dispositif formant différentiel conforme à l'invention.

La figure 2 est une vue en coupe suivant la ligne II-II de la figure 1.

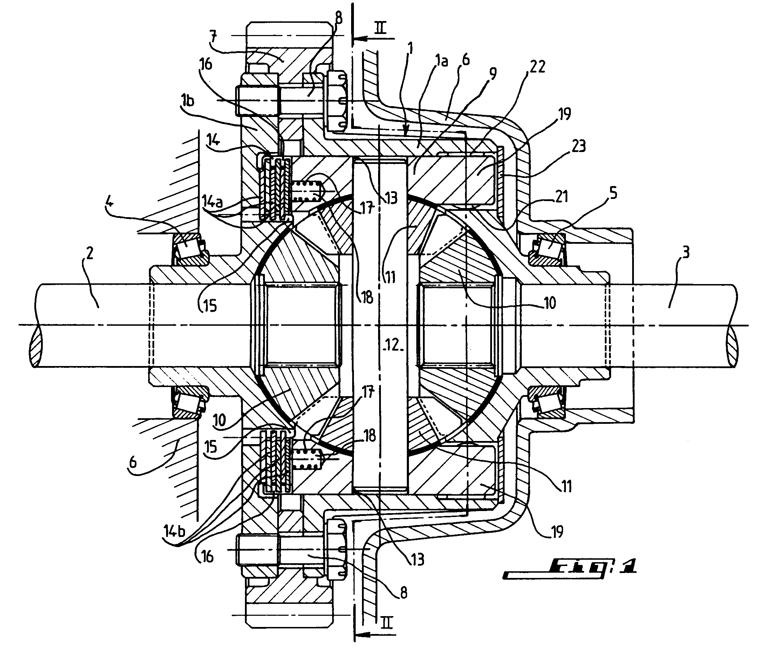

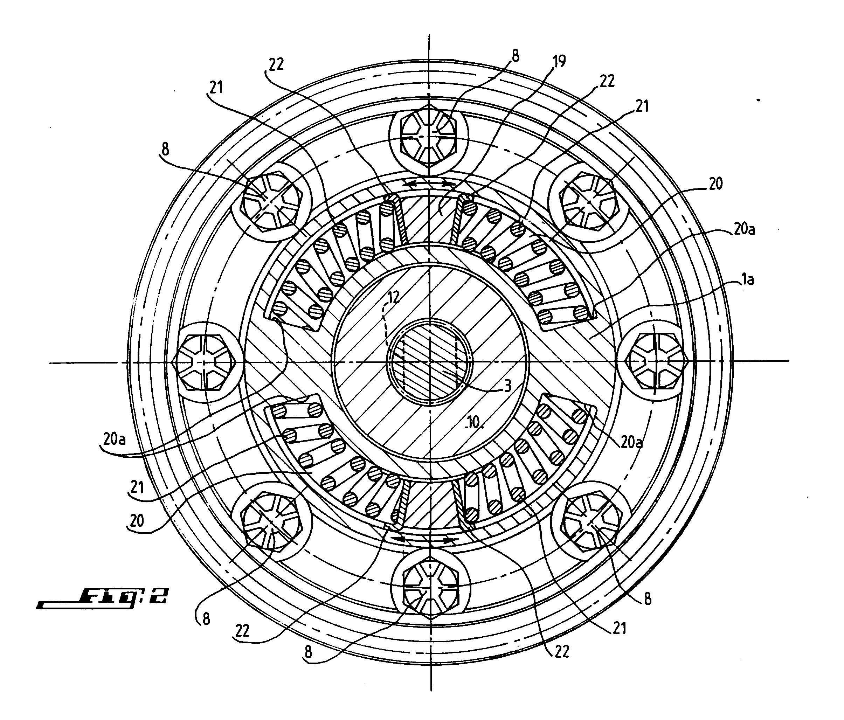

Le dispositif formant différentiel tel que représenté aux figures 1 et 2 comprend un boîtier externe de différentiel 1 monté rotatif relativement aux arbres de sortie coaxiaux 2 et 3 du différentiel par l'intermédiaire de moyens formant paliers constitués par exemple par deux roulements coniques 4 et 5 solidaires du carter fixe 6 du différentiel. Le boîtier externe 1 est entraîné en rotation par l'intermédiaire d'une couronne extérieurement dentée 7 solidaire d'une bride du boîtier 1 par des vis de fixation 8 et en engrènement avec un pignon de renvoi (non représenté) solidaire par exemple d'un arbre de transmission relié au moteur du véhicule par l'intermédiaire d'une boîte de vitesses. Le boîtier externe 1 est constitué de deux parties entre lesquelles est fixée la couronne 7, une partie 1a formant le boîtier proprement dit et une partie 1b formant couvercle de fermeture du bottier 1a. Le roulement 4 est ainsi monté entre le carter 6 du différentiel et la partie formant couvercle 1b tandis que le roulement 5 est monté entre le carter 6 et le boîtier 1a.

Le différentiel comprend également un boîtier interne 9 de forme générale cylindrique logé dans le boîtier externe 1, coaxial aux deux arbres de sortie 2, 3 du différentiel et mécaniquement couplé en rotation au boîtier externe 1 comme il sera décrit ultérieurement. Le boîtier interne 9 avec le boîtier externe 1 enferment les pignons du différentiel qui comprennent les deux pignons planétaires tronconiques 10 libres en rotation relativement au boîtier externe 1 et solidaires respectivement des arbres de sortie 2 et 3 par exemple par l'intermédiaire de cannelures et les pignons satellites 11 montés sur l'arbre 12, celui-ci étant fixé à ses deux extrémités respectivement dans deux trous correspondants coaxiaux 13 du boîtier interne 9 qui porte ainsi les pignons satellites 11 qui sont libres en rotation par rapport à l'arbre 12.

Un moyen d'accouplement à friction 14 est disposé entre une face interne de la partie formant couvercle 1b et une face extrême du boîtier interne 9 située en vis-à-vis de la face interne de la partie 1b parallèlement à celle-ci. Le moyen d'accouplement 14 est constitué d'un empilage de disques annulaires coaxiaux aux arbres de sortie 2, 3 en étant disposés perpendiculairement à ces derniers et alternativement accouplés en rotation à la partie formant couvercle 1b du boîtier externe 1 et au boîtier interne 9. Pour cela, certains 14a des disques comportent intérieurement des encoches périphériques régulièrement angulairement espacées pour définir des parties formant tenons s'engageant respectivement dans des rainures 15 réalisées dans la partie 1b du boîtier externe 1 parallèlement aux arbres de sortie 2, 3, tandis que les autres disques 14b comportent extérieurement des encoches périphériques régulièrement angulairement espacées définissant des parties formant tenons s'engageant dans des rainures correspondantes 16 du boîtier interne 9 et également parallèles aux arbres de sortie 2, 3. Les disques 14a, 14b du moyen d'accouplement à friction 14 sont axialement serrés les uns contre les autres par une pluralité de ressorts de compression 17 logés respectivement dans des trous borgnes 18 percés dans le boîtier interne 9 à partir de la face extrême de celui-ci. Les ressorts 17 sont disposés sur une même circonférence coaxialement aux arbres de sortie 2, 3 et sont de plus angulairement espacés de façon équidistante les uns des autres. Les ressorts 17 assurent ainsi une précharge axiale des disques 14a, 14b.

Le boîtier interne 9 est ainsi accouplé au boîtier externe 1 par le moyen d'accouplement à friction 14 et est également accouplé au boîtier externe 1 par des moyens autorisant un débattement angulaire relatif de part et d'autre d'une position moyenne lors d'oscillations forcées dues à la variation du couple moteur mentionnée précédemment, auxquels moyens sont associés des moyens élastiques de rappel à la position moyenne. Plus précisément, les moyens autorisant le débattement angulaire comprennent plusieurs tenons 19 dans le cas présent au nombre de deux, réalisés dans le boîtier interne 9 à l'opposé de la face extrême en vis-à-vis du moyen d'accouplement 14 et s'étendant parallèlement aux arbres de sortie 2, 3 en s'engageant respectivement dans deux évidements courbes identiques 20 réalisés dans le boîtier externe 1 concentriquement à ce dernier. Les deux évidements courbes 20 sont situés sur une même circonférence coaxialement aux arbres de sortie 2, 3. La figure 2 représente les deux tenons 19, qui sont diamétralement opposés, à leur position moyenne de part et d'autre de laquelle ils peuvent se débattre sur un secteur angulaire suivant l'évidement courbe correspondant 20 et déterminé par les moyens de rappel élastique. Ceux-ci comprennent deux paires de ressorts de compression 21 logés respectivement dans les deux évidements courbes 20. Les deux ressorts 21 de chaque paire sont en appui par l'une de leurs spires extrêmes de part et d'autre d'un tenon 19 tandis que leur autre spire extrême opposée est en appui sur la paroi extrême 20a délimitant l'évidement courbe 20. Les ressorts 21 sont positionnés en appui de part et d'autre du tenon associé 19 par l'intermédiaire respectivement de deux plaques en L inversé 22, dont le pied de chacune recouvre en partie au moins une spire extrême du ressort correspondant 21 pour assurer à la fois le positionnement de celui-ci et son guidage dans l'évidement courbe 20 lors du débattement angulaire relatif mentionné précédemment. Bien entendu, il est possible de prévoir trois ou plusieurs tenons 19 angulairement espacés de façon équidistante sur une même circonférence et susceptibles de débattre angulairement respectivement dans trois ou plusieurs évidements courbes identiques 20.

Une plaque de fermeture 23 emprisonne les paires de ressorts 21 dans leurs évidements courbes respectifs 20 et est fixée amoviblement au boîtier externe 1, par exemple par des vis de fixation (non représentées).

Le fonctionnement du dispositif ci-dessus décrit va être maintenant expliqué.

Une variation de position de la commande du papillon des gaz, ou d'un levier de charge du moteur, imposée par le conducteur du véhicule comportant le dispositif différentiel conforme à l'invention déclenche une série d'oscillations des éléments de transmission reliant l'arbre du moteur aux roues du véhicule. Ces oscillations correspondent à des couples de torsion amenant une déformation des ressorts de compression 21 et ainsi un débattement ou mouvement relatif alternatif, comme symbolisé par les doubles flèches en figure 2, entre le boîtier interne 9 et le boîtier externe 1. Il y a donc également mouvement relatif alternatif entre le boîtier interne 9 et la partie formant couvercle 1b et, par conséquent, entre les disques annulaires 14a et les disques annulaires 14b. Ces disques agissent ainsi comme amortisseur de torsion et leur rôle est donc de dissiper de l'énergie pendant les périodes d'oscillations forcées. L'énergie dissipée est fonction de la qualité du revêtement des disques 14a, 14b ainsi que de la précharge axiale des ressorts 17. Le retour en position moyenne du boîtier interne 9 est réalisé par les ressorts 21 agissant entre le boîtier externe 1 et le boîtier interne 9. La raideur globale en rotation définie par les ressorts 21 doit être inférieure à la raideur totale des transmissions du véhicule.

Le dispositif formant différentiel de l'invention permet donc de diminuer l'amplitude des oscillations ou accélérations longitudinales nuisibles au confort des occupants du véhicule.

## Revendications

1. Dispositif formant différentiel, du type comprenant un carter fixe (6); un boîtier externe (1) entrainé en rotation par l'intermédiaire d'un pignon d'entrée (7) solidaire du boîtier (1); un boîtier interne porte-satellites (9) logé dans le boîtier externe (1), coaxial aux deux arbres de sortie (2, 3) du différentiel et mécaniquement accouplé en rotation à ce dernier par des moyens (19, 20) autorisant un débattement angulaire relatif de part et d'autre d'une position moyenne lors d'oscillations forcées résultant d'une variation du couple moteur et associés à des moyens élastiques de rappel (21) à la position moyenne, caractérisé en ce que le boîtier externe (1) est monté rotatif dans le carter fixe (6) du différentiel; en ce qu'un moyen d'accouplement à friction (14) est disposé entre une face extrême du boîtier interne (9) et une face interne du boîtier externe (1) et est constitué d'un empilage de disques annulaires (14a, 14b) coaxiaux aux arbres de sortie (2, 3) montés en rotation dans le boîtier externe (1), les disques étant alternativement solidaires en rotation du boîtier externe (1) et du boîtier interne (9), de sorte que le moyen d'accouplement à friction (14) agisse comme amortisseur des oscillations forcées; et en ce que les moyens de débattement (19, 20) sont situés à l'opposé de la face extrême du boîtier interne (9).

2. Dispositif selon la revendication 1, caractérisé en ce que les disques (14a, 14b) du moyen d'accouplement à friction (14) sont serrés axialement par des ressorts de compression (17) logés dans le boîtier interne (9) en étant de préférence situés sur une même circonférence et angulairement espacés de façon équidistante les uns des autres.

3. Dispositif selon la revendication 1 ou 2, caractérisé en ce que les moyens précités autorisant le débattement angulaire comprennent au moins deux tenons (19) solidaires du boîtier interne (9) et engagés chacun dans un évidement courbe (20) réalisé dans le boîtier externe (1) concentriquement à ce dernier et en ce que les moyens élastiques de rappel précités comprennent au moins deux paires de ressorts (21), chacune disposée dans un évidement courbe (20) de façon que les deux ressorts (21) de la paire soient en appui de part et d'autre d'un tenon (19).

4. Dispositif selon la revendication 3, caractérisé en ce que les tenons (19) précités sont parallèles aux arbres de sortie (2, 3) du différentiel.

5. Dispositif selon l'une des revendications 3 ou 4, caractérisé en ce que les évidements courbes précités sont identiques et situés sur une même circonférence.

6. Dispositif selon l'une des revendications 3 à 5, caractérisé en ce qu'il comprend une plaque de fermeture (23) emprisonnant les paires de ressorts (21) dans leurs évidements courbes respectifs (20) et fixée amoviblement au boîtier externe (1).

7. Dispositif selon l'une des revendications 3 à 6, caractérisé en ce que les deux ressorts (21) de chaque paire précitée sont positionnés en appui de part et d'autre du tenon associé (19) par l'intermédiaire respectivement des deux éléments (22) servant également de guidage des ressorts (21) lors du débattement angulaire relatif précité.

8. Véhicule automobile, caractérisé en ce qu'il est équipé d'un dispositif formant différentiel tel que défini aux revendications 1 à 7.

## Patentansprüche

1. Ein Differential bildende Vorrichtung, derjenigung Gattung mit einem ortsfesten Gehäuse (6); einem inneren Gehäuse (1), das über ein mit dem Gehäuse (1) fest verbundenes Antriebszahnrad (7) gedreht wird; einem in dem äusseren Gehäuse (1) untergebrachten Planetenzahnradträgergehäuse (9), das koaxial mit den beiden Abtriebswellen (2, 3) des Differentials und mit diesem letzteren drehfest mechanisch durch Mittel (19, 20) gekuppelt ist, welche eine relative Winkelbewegung beiderseits einer mittleren Stellung während sich aus einer Veränderung des Antriebsdrehmomentes ergebenden Zwangsschwingungen gestatten und elastischen Mitteln (21) zur Rückführung in die mittlere Lage zugeordnet sind, dadurch gekennzeichnet, dass das äussere Gehäuse (1) drehbar in dem ortsfesten Gehäuse (6) des Differentials angeordnet ist; dass ein Reibungskuppelungsmittel (14) zwischen einer Endfläche des inneren Gehäuses (9) und einer inneren Fläche des äusseren Gehäuses (1) angeordnet ist und aus einem Stapel von koaxial mit den drehbar in dem äusseren Gehäuse (1) angeordneten Abtriebswellen (2, 3) angeordneten ringförmigen Scheiben (14a, 14b) besteht, wobei die Scheiben abwechselnd drehfest mit dem äusseren Gehäuse (1) und mit dem inneren Gehäuse (9) sind, so dass das Reibungskuppelungsmittel (14) als Dämpfer der Zwangsschwingungen wirkt; und dass die Mittel (19, 20) zur Winkelbewegung auf der der Endfläche des inneren Gehäuses (9) entgegengesetzten Seite liegen.

2. Vorrichtung nach Anspruch 1, dadurch gekennzeichnet, dass die Scheiben (14a, 14b) des Reibungskuppelungsmittels (14) durch in dem inneren Gehäuse (9) untergebrachten Druckfedern (17) axial zusammengedrückt werden, wobei sie vorzugsweise auf einer selben Kreisumfangslinie liegen und winkelabstandsgleich voneinander entfernt sind.

3. Vorrichtung nach Anspruch 1 oder 2, dadurch gekennzeichnet, dass die die Winkelbewegung gestattenden vorgenannten Mittel zwei mit dem inneren Gehäuse (9) fest verbundene Zapfen (19) aufweisen, die jeweils in eine in dem äusseren Gehäuse (1) konzentrisch zu diesem letzteren gebildete krumme Aussparung (20) eingreifen und dass die vorgenannten elastischen Rückstellmittel wenigstens zwei Paare von Federn (21) umfassen, wobei jedes in einer krummen Aussparung (20) angeordnet ist, damit die beiden Federn (21) des Paares sich beiderseits eines Zapfens (19) abstützen.

4. Vorrichtung nach Anspruch 3, dadurch gekennzeichnet, dass die vorgenannten Zapfen (19) parallel zu den Abtriebswellen (2, 3) des Differentials sind.

5. Vorrichtung nach einem der Ansprüche 3 oder 4, dadurch gekennzeichnet, dass die vorgenannten krummen Aussparungen gleichartig sind und auf einer selben Kreisumfangslinie liegen.

6. Vorrichtung nach einem der Ansprüche 3 bis 5, dadurch gekennzeichnet, dass sie eine die Paaren von Federn (21) in deren jeweiligen krummen Aussparungen (20) einschliessende und abnehmbar am äusseren Gehäuse (1) befestigte Verschlussplatte (23) aufweist.

7. Vorrichtung nach einem der Ansprüche 3 bis 6, dadurch gekennzeichnet, dass die beiden Federn (21) jedes vorgenannten Paares jeweils über zwei ebenfalls als Führung für die Federn (21) während der vorgenannten relativen Winkelbewegung dienenden Elementen (22) beiderseits des zugeordneten Zapfens (19) abgestützt positioniert werden.

8. Kraftfahrzeug, dadurch gekennzeichnet, dass es mit einer, wie in den Ansprüchen 1 bis 7 bestimmten ein Differential bildenden Vorrichtung ausgestattet ist.

## Claims

1. Device forming a differential, of the type comprising a stationary carrier housing (6); an external case (1) rotated through the medium of an input gear (7) made fast to the case (1); an internal pinion gear-carrying case (9) accommodated within the external case (1), coaxial with both axle drive output shafts (2, 3) of the differential and mechanically coupled for rotation with the latter by means (19, 20) allowing a relative angular displacement on either side of a mean position during forced oscillations resulting from a variation of the power torque and associated with elastic means (21) for returning to the mean position, characterized in that the external case (1) is rotatably mounted within the stationary housing (6) of the differential ; in that a friction coupling means (14) is disposed between an end face of the internal case (9) and an internal face of the external case (1) and consists of a stack of annular disks (14a, 14b) coaxial with the output shafts (2, 3), mounted for rotation in the external case (1), the disks being alternately made fast to the external case (1) and to the internal case (9) for rotation therewith, so that the friction coupling means (14) is acting as a damper of the forced oscillations; and in that the displacement means (19, 20) are located opposite from the end face of the internal case (9).

2. Device according to claim 1, characterized in that the disks (14a, 14b) of the friction coupling means (14) are axially clamped by compression springs (17) accommodated within the internal case (9) while preferably being located on a same circumference and angularly spaced in an equidistant fashion from each other.

3. Device according to claim 1 or 2, characterized in that the aforesaid means allowing the angular displacement comprise at least two lugs (19) made fast to the internal case (9) and each one inserted into a curved recess (20) formed in the external case (1) concentrically with this latter and in that the aforesaid elastic return means comprise at least two pairs of springs (21), each one of which disposed in a curved recess (20) so that both springs (21) of the pair be bearing on either side of a lug (19).

4. Device according to claim 3, characterized in that the aforesaid lugs (19) are parallel to the output shafts (2, 3) of the differential.

5. Device according to one of claim 3 or 4, characterized in that the aforesaid curved recesses are identical and located on a same circumference.

6. Device according to one of claims 3 to 5, characterized in that it comprises a closure plate (23) confining the pairs of springs (21) in their respective curved recesses (20) and removably fastened to the external case (1).

7. Device according to one of claims 3 to 6, characterized in that both springs (21) of each aforesaid pair are located in bearing relationship on either side of the associated lug (19) through the medium of both elements (22), respectively, also serving as a guide of the springs (21) during the aforesaid relative angular displacement.

8. Automotive vehicle, characterized in that it is fitted with a device forming a differential such as defined in claims 1 to 7.
